# EUROPEAN PATENT APPLICATION

(11) **EP 4 566 934 A1**
(43) Date of publication of application: **11.06.2025**
(21) Application number: 24208397.0
(22) Date of filing: 23.10.2024
(51) Int. Cl.: B63B 49/00, B63H 25/42, G06F 3/04886, G06F 3/04895, B63H 20/00, B63H 25/02

(54) **DISPLAY CONTROL METHOD FOR MANEUVERING FUNCTION DISPLAY UNIT IN MARINE VESSEL CAPABLE OF EXECUTING VARIOUS MANEUVERING FUNCTIONS AND MANEUVERING SYSTEM OF MARINE VESSEL**

(30) Priority: 24.11.2023 JP 2023199127
(71) Applicant: Yamaha Hatsudoki Kabushiki Kaisha, Iwata-shi, Shizuoka 438-8501 (JP)
(72) Inventor: Ito, Makoto, Iwata-shi, Shizuoka, 4388501 (JP); Okamura, Daisuke, Iwata-shi, Shizuoka, 4388501 (JP)
(74) Representative: Grünecker Patent- und Rechtsanwälte PartG mbB

(57) **Abstract**

A display control method capable of improving usability of maneuvering function display units in a marine vessel. The maneuvering function display units include a first maneuvering function display unit that displays the maneuvering function that can start to be used while the marine vessel is traveling and a second maneuvering function display unit that displays the maneuvering function that can start to be used while the marine vessel is not traveling. The display control method comprises switching between display and non-display of each of the maneuvering function display units or changing a display position of each of the maneuvering function display units on a basis of at least one of a configuration of a maneuvering system of the marine vessel, a maneuvering status of the marine vessel, a use purpose of the marine vessel, a current position of the marine vessel, and an execution record of the maneuvering function.

## Description

The present invention relates to a display control method for a maneuvering function display unit in a marine vessel capable of executing various maneuvering functions and a maneuvering system of the marine vessel.

In recent years, in a small marine vessel, functions (hereinafter, referred to as a "maneuvering function") related to executable maneuvering, for example, a maneuvering mode, have increased. Correspondingly, a plurality of physical switches for executing various maneuvering functions are arranged on a console panel of a maneuvering seat. On the other hand, since a vessel steering mechanism, a remote controller, a joystick, and/or a multi function display (MFD) are disposed on the console panel, it has been difficult to secure a place for disposing a large number of physical switches on the console panel as the maneuvering function increases.

Therefore, there has been proposed a technique in which the MFD is configured by a display device having a touch panel function, in which a touch button as a software key corresponding to each maneuvering function is displayed on the MFD, and a desired function is executed by a vessel operator touching the touch button (see, for example, JP 2015-66978 A). In this technique, a device operation screen displayed on the MFD is switched according to the operation purpose of the vessel operator or the situation of the marine vessel, and the touch button corresponding to each maneuvering function is changed accordingly. In a case where a certain maneuvering function is not enabled, a touch button corresponding to the maneuvering function is displayed in a non-operation state.

However, in the technique described in JP 2015-66978 A, even when the touch button corresponding to the maneuvering function that is not enabled is in the non-operation state, the touch button remains displayed, and the display position of the touch button does not change. Therefore, in a case where the touch button corresponding to the maneuvering function that is not enabled is present at a position where the vessel operator can easily operate, it is inconvenient for the vessel operator to erroneously operate the touch button, for example. Thus, the technique described in JP 2015-66978 A has room for improvement from the viewpoint of usability.

An object of the present invention is to provide a display control method of a plurality of maneuvering function display units that display maneuvering functions of a marine vessel and a maneuvering system of a marine vessel that can improve usability of a maneuvering function display unit in a marine vessel.

According to the present invention said object is solved by a display control method of a plurality of maneuvering function display units that display maneuvering functions of a marine vessel having the features of independent claim 1. Moreover, said object is also solved by a maneuvering system of a marine vessel having the features of independent claim 12. Preferred embodiments are laid down in the dependent claims.

According to a preferred embodiment, a display control method of a plurality of maneuvering function display units that display maneuvering functions of a marine vessel comprises switching between display and non-display of each of the maneuvering function display units or changing a display position of each of the maneuvering function display units on a basis of at least one of a configuration of a maneuvering system of the marine vessel, a maneuvering status of the marine vessel, a use purpose of the marine vessel, a current position of the marine vessel, and an execution record of the maneuvering function, wherein the plurality of maneuvering function display units include a first maneuvering function display unit that displays the maneuvering function that can start to be used while the marine vessel is traveling, and a second maneuvering function display unit that displays the maneuvering function that can start to be used while the marine vessel is not traveling.

According to this configuration, the display and non-display of each maneuvering function display unit is switched or the display position of each maneuvering function display unit is changed on the basis of at least one of the configuration of the maneuvering system of the marine vessel, the maneuvering status of the marine vessel, the use purpose of the marine vessel, the current position of the marine vessel, and the execution record of the maneuvering function. Accordingly, it is possible to hide the maneuvering function display unit that displays the maneuvering function that cannot be used or the maneuvering function that is less frequently used, or change the display position of the maneuvering function display unit so as to move away from the position where the vessel operator can easily operate. As a result, it is possible to prevent the vessel operator from erroneously touching the maneuvering function display unit that displays the maneuvering function that cannot be used or the maneuvering function that is less frequently used, and thus, it is possible to improve the usability of the maneuvering function display unit.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a perspective view of a marine vessel including a maneuvering system according to a first embodiment.
FIG. 2 is a perspective view of main parts of a cockpit in the marine vessel in FIG. 1.
FIG. 3 is a block diagram for schematically explaining a configuration of the maneuvering system included in the marine vessel in FIG. 1.
FIG. 4 is a diagram for explaining a configuration of a steering mechanism in the maneuvering system in FIG. 3.
FIGS. 5A to 5C are diagrams for explaining a case of switching between display and non-display of each touch button of a maneuvering panel in the first embodiment.
FIGS. 6A to 6D are diagrams for explaining a case where the display position of each touch button of the maneuvering panel is changed in the first embodiment.
FIGS. 7A to 7D are diagrams for explaining a case where the display position of each touch button of the maneuvering panel is changed in the first embodiment.
FIGS. 8A to 8C are diagrams for explaining a case where the display form of each touch button of the maneuvering panel is changed according to a variation of the first embodiment.
FIG. 9 is a diagram illustrating a case where a maneuvering panel is disposed on a remote controller.
FIG. 10 is a diagram illustrating a case where a maneuvering panel is disposed on a joystick.
FIG. 11 is a diagram illustrating a case where a partial region of a touch panel of the MFD functions as a maneuvering panel.
FIG. 12 is a diagram for explaining a configuration of a steering mechanism in the maneuvering system according to a second embodiment.
FIGS. 13A to 13D are diagrams for explaining a case where display and non-display of the function display icons of the maneuvering panel are switched and the display positions of the function display icons are changed in the second embodiment.
FIGS. 14A and 14B are diagrams for explaining a case where each push button and each function display icon are separately arranged.

### DESCRIPTION OF THE EMBODIMENTS

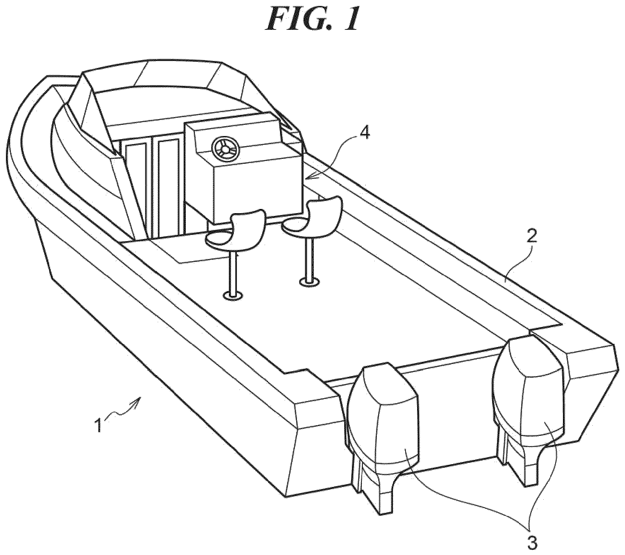

Hereinafter, preferred embodiments will be described with reference to the drawings. First, a first embodiment will be described. FIG. 1 is a perspective view of a marine vessel 1 including a maneuvering system 11 according to the first embodiment. The marine vessel 1 includes a hull 2 and two outboard motors 3 (marine propulsion devices) mounted on the hull 2. Each outboard motor 3 includes an engine and a propeller (both not illustrated), and generates thrust by rotating the propeller by a driving force of the engine. Note that the number of outboard motors 3 included in the marine vessel 1 is not limited to two, and the marine vessel 1 may include only one outboard motor 3, or the marine vessel 1 may include three or more outboard motors 3. In addition, the marine vessel 1 may include an inboard motor or an inboard/outboard motor as a marine propulsion device instead of the outboard motor 3. Further, the marine vessel 1 may be a jet propulsion boat.

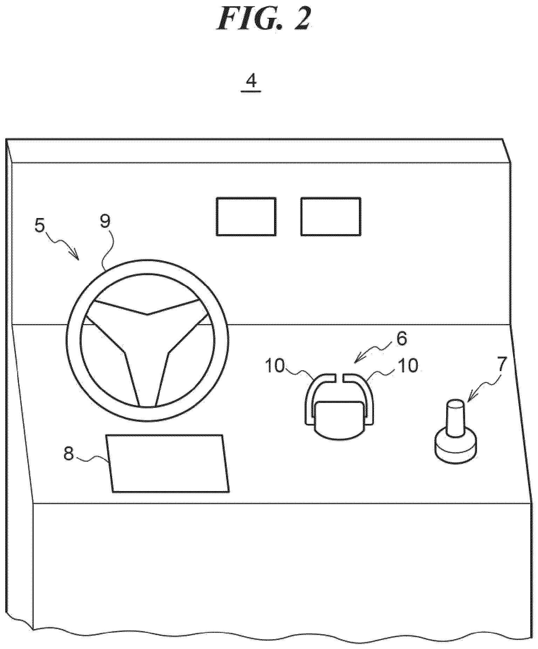

In the marine vessel 1, a cockpit 4 is provided on the bow side which is the front portion of the hull 2. FIG. 2 is a perspective view of main parts of the cockpit 4. A steering mechanism 5, a remote controller 6, a joystick 7, and an MFD 8 are disposed in the cockpit 4.

The steering mechanism 5 is a device for the vessel operator to determine the course of the marine vessel 1. The steering mechanism 5 includes a steering wheel 9 that can be rotated. The vessel operator turns the marine vessel 1 right and left by rotating the steering wheel 9 right and left.

The remote controller 6 has a lever 10 corresponding to each outboard motor 3. By operating each lever 10, the vessel operator can switch the direction of thrust generated by the corresponding outboard motor 3 between the forward direction and the backward direction, and adjust the output of the corresponding outboard motor 3 to adjust the vessel speed. For example, when the lever 10 is tilted forward in the direction of the "F" position, the corresponding outboard motor 3 generates thrust in the forward direction. When the lever 10 is tilted backward in the direction of the "R" position, the corresponding outboard motor 3 generates thrust in the backward direction. Further, when the lever 10 is located at the "N" position which is located between the "F" position and the "R" position, in the outboard motor 3, the connection between the engine and the propeller is disconnected by the clutch, so that the corresponding outboard motor 3 does not generate thrust.

The joystick 7 can be tilted forward, backward, leftward, and rightward, and can be rotated around an axis. By operating the joystick 7, the vessel operator can move the marine vessel 1 along the course corresponding to the tilting direction of the joystick 7 with thrust corresponding to the tilt amount of the joystick 7.

The MFD 8 is, for example, a color liquid crystal display (LCD) display, and functions as a display that displays various types of information and also functions as a touch panel that receives an input from the vessel operator. For example, the MFD 8 displays the rotation speed of the engine of each outboard motor 3 and the vessel speed of the marine vessel 1.

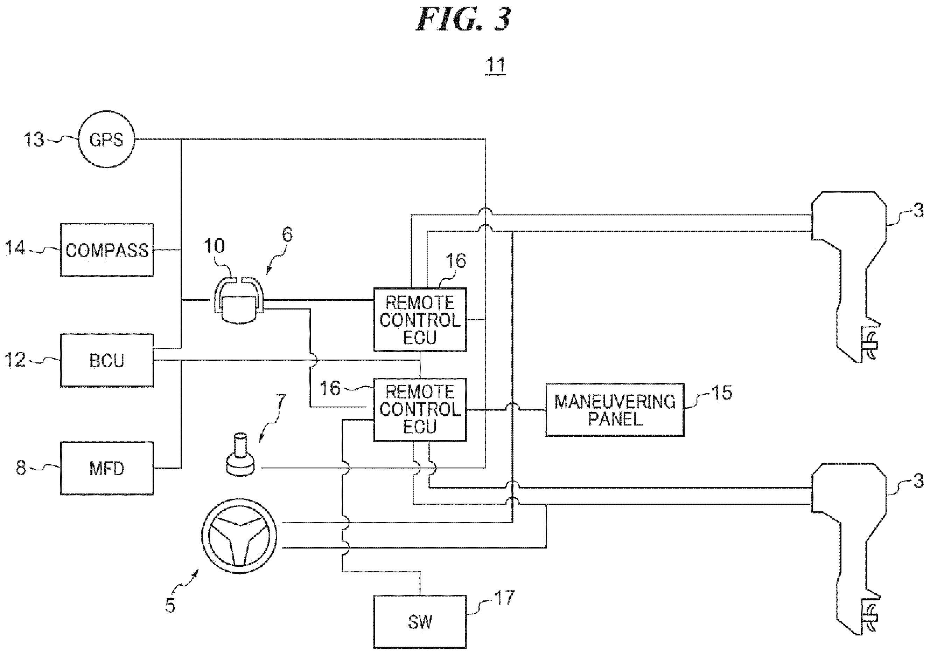

FIG. 3 is a block diagram for schematically illustrating a configuration of the maneuvering system 11 included in the marine vessel 1 in FIG. 1. In FIG. 3, the maneuvering system 11 includes an outboard motor 3, a boat control unit (BCU) 12 (controller), an MFD 8, a GPS 13, a compass 14, a remote controller 6, a joystick 7, a steering mechanism 5, a maneuvering panel 15, a remote control ECU 16, and a switch (SW) 17. The components of the maneuvering system 11 are communicably connected to each other.

The GPS 13 grasps the current position of the marine vessel 1 and transmits the current position of the marine vessel 1 to the BCU 12 as position information. The compass 14 grasps the azimuth (direction of the bow) of the marine vessel 1 and transmits the azimuth of the marine vessel 1 to the BCU 12. The steering mechanism 5 receives the steering operation of the vessel operator and transmits a steering angle signal corresponding to the received operation to each remote control ECU 16. The SW 17 receives an instruction to turn on and start each outboard motor 3, and transmits a signal corresponding to the received instruction to the BCU 12 and each remote control ECU 16.

The BCU 12 grasps the situation of the marine vessel 1 based on the signals transmitted from the respective components of the maneuvering system 11, determines the thrust to be generated by each outboard motor 3 and the acting direction of the thrust to be taken, and transmits a control signal to each remote control ECU 16. One remote control ECU 16 is provided corresponding to one outboard motor 3, and controls an engine and/or a steering mechanism (not illustrated) of the corresponding outboard motor 3 according to a signal transmitted from the BCU 12, the remote controller 6, the joystick 7, or the like, to adjust the thrust of the outboard motor 3 and the acting direction of the thrust. Therefore, in the maneuvering system 11, the vessel operator can control the vessel speed and/or the direction of the bow of the marine vessel 1 by operating the joystick 7 and/or the levers 10 of the remote controller 6.

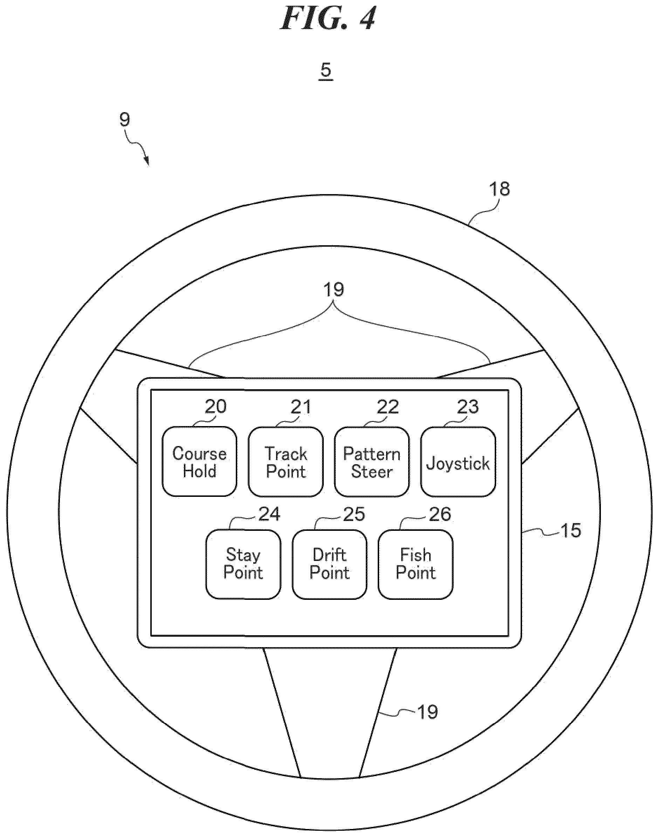

FIG. 4 is a diagram for explaining the configuration of the steering mechanism 5, and FIG. 4 illustrates the steering mechanism 5 as viewed from the vessel operator side. Note that the vertical direction and the horizontal direction in FIG. 4 coincide with the up-down direction and the left-right direction of the marine vessel 1.

In FIG. 4, the steering mechanism 5 includes a steering wheel 9 and a column portion (not illustrated) that pivotally supports the steering wheel 9 so as to be rotatable about a steering shaft. The steering wheel 9 includes an annular wheel portion 18 and a plurality of (for example, three) spoke portions 19 connecting the column portion and the wheel portion 18.

In the present embodiment, the maneuvering panel 15 is disposed in the steering mechanism 5 (operation means). The maneuvering panel 15 is attached to the column portion so that the maneuvering panel 15 does not rotate even when the steering wheel 9 rotates about the steering shaft.

The maneuvering panel 15 is, for example, an LCD display, functions as a touch panel that receives an input of a vessel operator, and displays touch buttons 20 to 26 (maneuvering function display unit) as a software key corresponding to each maneuvering mode. When the vessel operator touches each of the touch buttons 20 to 26, an instruction to execute the maneuvering mode corresponding to the touched touch button is transmitted from the maneuvering panel 15 to the BCU 12.

Each maneuvering mode corresponding to each of the touch buttons 20 to 26 will be described below.

A Course Hold button 20 corresponds to a course maintenance mode. The course maintenance mode is a maneuvering mode that can start to be used while the marine vessel 1 is traveling. The course maintenance mode is a maneuvering mode in which the traveling marine vessel 1 is caused to maintain a predetermined course in consideration of the influence from a tidal stream or a wind flow on the marine vessel 1 even if there is the tidal stream or the wind flow.

A Track Point button 21 corresponds to a track point mode. The track point mode is a maneuvering mode that can start to be used while the marine vessel 1 is traveling. The track point mode is a mode in which the marine vessel 1 moves along a preset movement route via a plurality of stay points. In order to execute the track point mode, the vessel operator sets a movement route and a plurality of stay points of the marine vessel 1 using the MFD 8 in advance. For example, the vessel operator directly touches a desired point (for example, on a map) displayed on the touch panel of the MFD 8 with a finger or the like, and sets each stay point as a destination from the current stay point. At this time, straight routes connecting the respective stay points are connected to set a movement route.

A Pattern Steer button 22 corresponds to a pattern maneuvering mode. The pattern maneuvering mode is a maneuvering mode that can start to be used while the marine vessel 1 is traveling. The pattern maneuvering mode is a mode used when a fish swarm is searched for using a fish finder after the marine vessel 1 arrives at a stay point where fishing is performed. In the pattern maneuvering mode, the marine vessel 1 moves along a preset movement route based on the current maneuvering place, and a zigzag route or a turning route is set as the movement route at this time.

A Joystick button 23 corresponds to a joystick mode. The joystick mode is a maneuvering mode that can start to be used while the marine vessel 1 is not traveling. In the joystick mode, the outboard motor 3 operates mainly in accordance with the operation of the joystick 7. The Stay Point (registered trademark) corresponds to a Stay Point button 24. The Stay Point is a maneuvering mode that can start to be used while the marine vessel 1 is not traveling. In the Stay Point, the thrust of the outboard motor 3 and the acting direction of the thrust are integrally controlled so as to keep the marine vessel 1 at one point and maintain the azimuth (direction of the bow) of the marine vessel 1 in a specific direction.

A Drift Point button 25 corresponds to the Drift Point (registered trademark). The Drift Point is a maneuvering mode that can start to be used while the marine vessel 1 is not traveling. In the Drift Point, the thrust of the outboard motor 3 and the acting direction of the thrust are controlled so as to maintain the direction of the bow of the marine vessel 1 in a specific direction, but the marine vessel 1 does not stay at one stay point, and the marine vessel 1 moves while being flowed by wind or water flow. A Fish Point button 26 corresponds to the Fish Point (registered trademark). The Fish Point is a maneuvering mode that can start to be used while the marine vessel 1 is not traveling. In the Fish Point, the thrust of the outboard motor 3 and the acting direction of the thrust are controlled such that the marine vessel 1 stays at one stay point, but the direction of the bow of the marine vessel 1 changes due to the tidal stream or the wind flow.

Note that, in order to execute the Stay Point, the marine vessel 1 needs to move in the lateral direction against the wind and the tidal stream. However, in a case where the marine vessel 1 includes only one outboard motor 3, the marine vessel 1 cannot move in the lateral direction. Therefore, the Stay Point involving the lateral movement cannot be executed.

In addition, "traveling" in the present embodiment indicates a case where the vessel operator intends to move the marine vessel 1 with intention, that is, a case where any lever 10 of the remote controller 6 falls down in the direction of the "F" position or the direction of the "R" position. "Not traveling" indicates a case where the vessel operator does not intentionally move the marine vessel 1, that is, a case where both the levers 10 of the remote controller 6 are located at the "N" position and each outboard motor 3 of the marine vessel 1 does not generate thrust, or a case where fixed point holding functions such as Stay Point, Fish Point, and Drift Point are executed.

As described above, the course maintenance mode, the track point mode, and the pattern maneuvering mode are the maneuvering mode (hereinafter, abbreviated as "available mode while traveling") that can start to be used while the marine vessel 1 is traveling. Therefore, each of the Course Hold button 20, the Track Point button 21, and the Pattern Steer button 22 is a touch button (first maneuvering function display unit) that displays an available mode while traveling. In addition, the maneuvering mode (hereinafter, abbreviated as a "available mode while not traveling") that can start to be used while the marine vessel 1 is not traveling is the joystick mode, the Stay Point, the Drift Point, and the Fish Point. Thus, each of the Joystick button 23, the Stay Point button 24, the Drift Point button 25, and the Fish Point button 26 is a touch button (second maneuvering function display unit) that displays the available mode while not traveling.

As described above, since the maneuvering mode that can be used is changed depending on whether the marine vessel 1 is traveling or not, an unavailable maneuvering mode occurs depending on the state of the marine vessel 1. In addition, an unavailable maneuvering mode also occurs in a case where there is only one outboard motor 3 included in the marine vessel 1. At this time, if the touch button corresponding to the unavailable maneuvering mode is continuously displayed or is displayed at a position easily visually recognized by the vessel operator, the vessel operator may erroneously operate the touch button.

Correspondingly, in the present embodiment, the BCU 12 controls the maneuvering panel 15 on the basis of the configuration of the maneuvering system 11, the maneuvering status of the marine vessel 1, the use purpose of the marine vessel 1, the current position of the marine vessel 1, and/or the execution record of each maneuvering mode, and switches the display and non-display of each of the touch buttons 20 to 26 or changes the display position of each of the touch buttons 20 to 26. For example, the display position is changed such that the touch button corresponding to the maneuvering mode considered to be frequently used (that is, the possibility of use is high) is displayed at a position where the vessel operator can easily see the touch button and/or a position where the vessel operator can easily operate the touch button as compared with the touch buttons corresponding to other maneuvering modes.

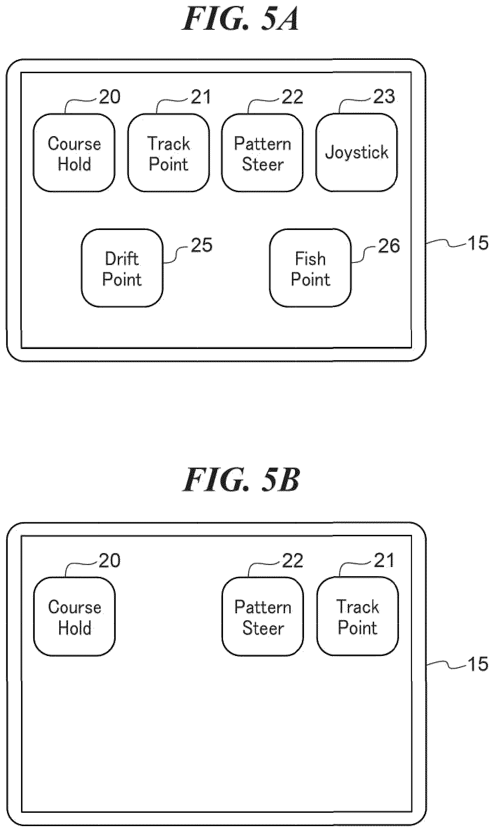

FIGS. 5A to 5C are diagrams for explaining a case of switching between display and non-display of each of the touch buttons 20 to 26 of the maneuvering panel 15. FIGS. 5A to 5C illustrate the maneuvering panel 15, and do not illustrate the steering wheel 9 and the spoke portion 19.

First, in a case where there is only one outboard motor 3 included in the marine vessel 1, the marine vessel 1 cannot move in the lateral direction as described above, and thus the Stay Point cannot be executed. Therefore, the BCU 12 does not display the Stay Point button 24 on the maneuvering panel 15. In this case, the Drift Point button 25 may be moved to a position closer to the hand of the vessel operator who grips the steering wheel 9 in consideration of the operability of the vessel operator (FIG. 5A).

In addition, in a case where the lever 10 of the remote controller 6 is tilted in the direction of the "F" position, since the marine vessel 1 is traveling, the BCU 12 does not display any of the Joystick button 23, the Stay Point button 24, the Drift Point button 25, and the Fish Point button 26, which are touch buttons for displaying the available mode while not traveling, on the maneuvering panel 15. In this case, the Track Point button 21 may be moved to a position closer to the hand of the vessel operator who grips the steering wheel 9 in consideration of the operability of the vessel operator (FIG. 5B).

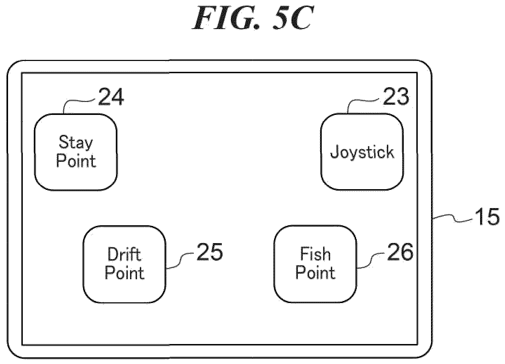

In addition, in a case where the lever 10 of the remote controller 6 is located at the "N" position, since the marine vessel 1 is not traveling, the BCU 12 does not display any of the Course Hold button 20, the Track Point button 21, and the Pattern Steer button 22, which are touch buttons for displaying the available mode while traveling, on the maneuvering panel 15. In this case, in consideration of the operability of the vessel operator, the Stay Point button 24, the Drift Point button 25, and/or the Fish Point button 26 may be moved to a position closer to the hand of the vessel operator gripping the steering wheel 9 (FIG. 5C).

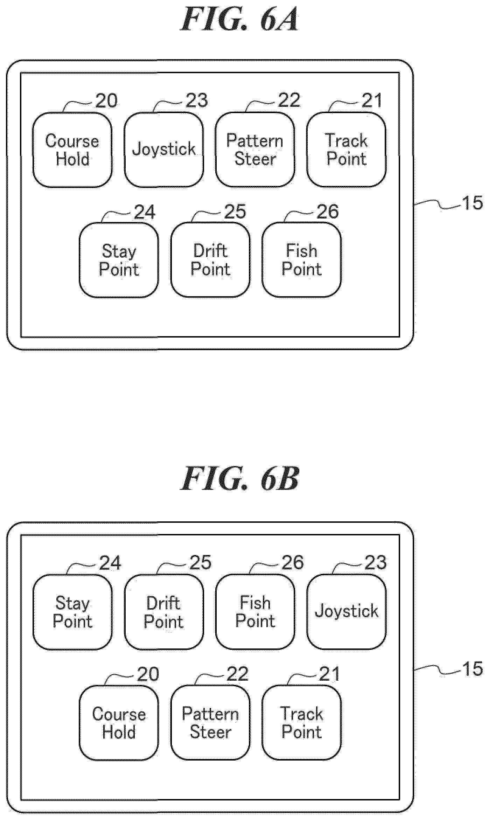

FIGS. 6A to 6D are diagrams for explaining a case where the display position of each of the touch buttons 20 to 26 of the maneuvering panel 15 is changed. FIGS. 6A to 6D also illustrate the maneuvering panel 15, and do not illustrate the steering wheel 9 and the spoke portion 19.

In the marine vessel 1, when the maneuvering system 11 is activated, the BCU 12 may inquire of the vessel operator about the use purpose of the marine vessel 1 by the MFD 8, for example, whether the marine vessel 1 is mainly used off-shore (in a distant sea region) or in-shore (in a coastal region).

To cope with this, in a case where the vessel operator replies that the marine vessel 1 is mainly to be used off-shore by the input to the MFD 8, the period of time during which the marine vessel 1 travels becomes long, and thus, it is considered that the available mode while traveling is mainly used. Therefore, the BCU 12 displays the Course Hold button 20, the Track Point button 21, and the Pattern Steer button 22, which are touch buttons for displaying the available mode while traveling considered to be frequently used, at positions that are easier for the vessel operator to see than the Joystick button 23, the Stay Point button 24, the Drift Point button 25, and the Fish Point button 26, which are touch buttons for displaying the available mode while not traveling.

Specifically, since the vessel operator who grips the wheel portion 18 of the steering wheel 9 views the maneuvering panel 15 from above, the Course Hold button 20, the Track Point button 21, and the Pattern Steer button 22, which are considered to be frequently used, are displayed above the Joystick button 23, the Stay Point button 24, the Drift Point button 25, and the Fish Point button 26. However, for example, the Joystick button 23 may be displayed on the upper part of the display of the maneuvering panel 15 depending on the size of the display region of the maneuvering panel 15. In this case, the Track Point button 21 may be moved to a position closer to the hand of the vessel operator who grips the steering wheel 9 in consideration of the operability of the vessel operator (FIG. 6A).

The touch button located at a position easily seen from the vessel operator may be, for example, a touch button located at a position close to the vessel operator in the display on the maneuvering panel 15 or the like. More specifically, the touch button located at a position easily viewable by the vessel operator viewing the maneuvering panel 15 from above may be a touch button located at a position close to the vessel operator, that is, for example, at an upper position in the display of the maneuvering panel 15 or the like. These descriptions may be similarly applied to each case described below.

On the other hand, in a case where the vessel operator replies that the marine vessel 1 is mainly to be used in-shore by the input to the MFD 8, it is considered that the available mode while not traveling is mainly used because the period of time during which the marine vessel 1 is not traveling becomes long. Therefore, the BCU 12 displays the Joystick button 23, the Stay Point button 24, the Drift Point button 25, and the Fish Point button 26, which are touch buttons for displaying the available mode while not traveling considered to be frequently used, at positions that are easier for the vessel operator to see than the Course Hold button 20, the Track Point button 21, and the Pattern Steer button 22, which are touch buttons for displaying the available mode while traveling. Specifically, the Joystick button 23, the Stay Point button 24, the Drift Point button 25, and the Fish Point button 26 are displayed above the Course Hold button 20, the Track Point button 21, and the Pattern Steer button 22 (FIG. 6B).

Furthermore, when the maneuvering system 11 is activated in the marine vessel 1, the BCU 12 may inquire of the vessel operator whether the marine vessel 1 is used for fishing by the MFD 8.

To cope with this, in a case where the vessel operator replies that the marine vessel 1 is to be used for fishing by the input to the MFD 8, it is considered that the period of time during which the marine vessel 1 is not traveling becomes long. Therefore, the BCU 12 displays the Joystick button 23, the Stay Point button 24, the Drift Point button 25, and the Fish Point button 26, which are touch buttons for displaying the available mode while not traveling considered to be frequently used, at positions that are easier for the vessel operator to see than the Course Hold button 20, and the Track Point button 21, which are touch buttons for displaying the available mode while traveling. Note that the Pattern Steer button 22 is a touch button that displays an available mode while traveling. However, in a case where a vessel operator or a passenger goes fishing, the Pattern Steer button 22 is also displayed at a position that is easier for the vessel operator to see than the Course Hold button 20 and the Track Point button 21 because the pattern maneuvering mode may also be used.

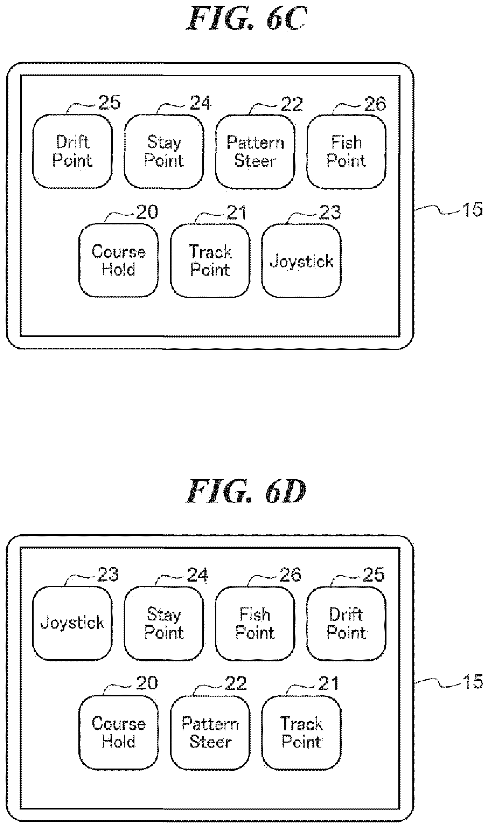

Specifically, the Pattern Steer button 22, the Stay Point button 24, the Drift Point button 25, and the Fish Point button 26 are displayed above the Course Hold button 20 and the Track Point button 21 (FIG. 6C). Note that, in the maneuvering panel 15 illustrated in FIG. 6C, there is no sufficient display region for displaying the five touch buttons in the upper part of the display of the maneuvering panel 15, and thus, among the touch buttons corresponding to the available mode while not traveling, the Joystick button 23, which is considered to be less frequently used for fishing, is displayed in the lower part of the display of the maneuvering panel 15 for convenience.

In addition, when the maneuvering system 11 is activated in the marine vessel 1, the BCU 12 may inquire of the vessel operator whether the marine vessel 1 is used for cruising by the MFD 8. To cope with this, in a case where the vessel operator replies that the marine vessel 1 is to be used for cruising by the input to the MFD 8, it is considered that the period of time during which the marine vessel 1 is traveling becomes long. Therefore, the BCU 12 displays the Course Hold button 20, the Track Point button 21, and the Pattern Steer button 22, which are touch buttons for displaying the available mode while traveling considered to be frequently used, at positions that are easier for the vessel operator to see than the Joystick button 23, the Stay Point button 24, the Drift Point button 25, and the Fish Point button 26, which are touch buttons for displaying the available mode while not traveling (FIG. 6A).

Further, the BCU 12 changes the display position of each of the touch buttons 20 to 26 based on the execution record of each maneuvering mode. For example, in a case where the marine vessel 1 is mainly used in-shore and the execution frequency of the joystick mode, the Stay Point, the Drift Point, and the Fish Point is higher than the execution frequency of the pattern maneuvering mode, the course maintenance mode, and the track point mode, the Joystick button 23, the Stay Point button 24, the Drift Point button 25, and the Fish Point button 26 are displayed above the Course Hold button 20, the Track Point button 21, and the Pattern Steer button 22 (FIG. 6D).

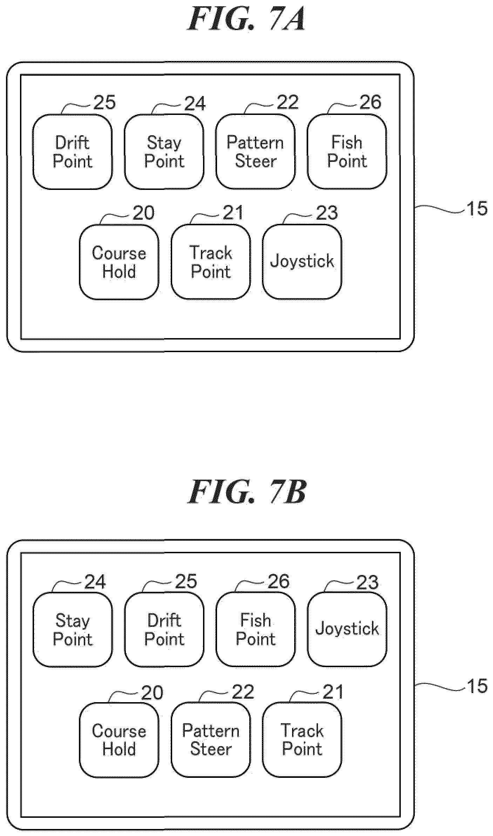

FIGS. 7A to 7D are diagrams for explaining a case where the display position of each of the touch buttons 20 to 26 of the maneuvering panel 15 is changed. FIGS. 7A to 7D also illustrate the maneuvering panel 15, and do not illustrate the steering wheel 9 and the spoke portion 19.

The BCU 12 changes the display position of each of the touch buttons 20 to 26 on the basis of the maneuvering status of the marine vessel 1 (for example, the maneuvering pattern and the maneuvering time). For example, in a case where the marine vessel 1 is stopped after traveling to the last stay point in the track point mode or in a case where the marine vessel 1 is stopped after cruising for a predetermined period of time, it is considered that there is a high possibility that the vessel operator or the passenger will do fishing after the marine vessel 1 is stopped.

Therefore, the BCU 12 displays the Joystick button 23, the Stay Point button 24, the Drift Point button 25, and the Fish Point button 26, which are touch buttons for displaying the available mode while not traveling considered to be frequently used, at positions that are easier for the vessel operator to see than the Course Hold button 20 and the Track Point button 21, which are touch buttons for displaying the available mode while traveling. In addition, the Pattern Steer button 22, which displays the pattern maneuvering mode that may be used in a case where the vessel operator or the passenger performs fishing although it is the available mode while traveling, is also displayed at a position that is easier for the vessel operator to see than the Course Hold button 20 and the Track Point button 21 (FIG. 7A). Also in the case of FIG. 7A, similarly to the case of FIG. 6C, the Joystick button 23 which is considered to be used less frequently in fishing is displayed in the lower part of the display of the maneuvering panel 15 for the sake of convenience due to the size of the display region of the maneuvering panel 15.

In addition, the BCU 12 changes the display position of each of the touch buttons 20 to 26 on the basis of the maneuvering place of the marine vessel 1. For example, in a case where the vessel operator moves the lever 10 of the remote controller 6 to the "N" position after the marine vessel 1 has moved to the vicinity of the pier, for example, the center of gravity of the marine vessel 1 has moved to within 100 m from the pier, it is considered that there is a high possibility that the marine vessel 1 is operated using the joystick 7 in order to docking the marine vessel 1 at the pier.

Therefore, the BCU 12 displays the Joystick button 23 at a position where the vessel operator can easily see. In addition, at this time, it is considered that there is a higher possibility of using the available mode while not traveling than the available mode while traveling. Thus, in addition to the Joystick button 23, the BCU 12 displays the Stay Point button 24, the Drift Point button 25, and the Fish Point button 26, which are touch buttons for displaying the available mode while not traveling considered to be frequently used, at positions that are easier for the vessel operator to see than the Course Hold button 20, the Track Point button 21, and the Pattern Steer button 22, which are touch buttons for displaying the available mode while traveling (FIG. 7B).

Further, the SW 17 receives an instruction to turn on or start each outboard motor 3. Since there is a high possibility that the vessel operator releases the marine vessel 1 from the pier using the joystick 7 until a predetermined period of time elapses after the outboard motor 3 is powered on or started, the BCU 12 displays the Joystick button 23 at a position where the vessel operator can easily see (FIG. 7B).

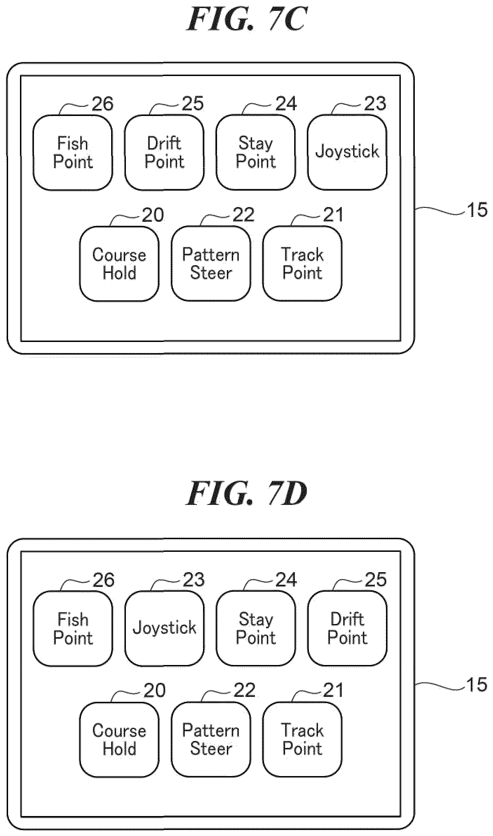

In addition, the BCU 12 changes the display position of each of the touch buttons 20 to 26 on the basis of the execution record of each maneuvering mode and/or the maneuvering status when each maneuvering mode is executed. For example, it is assumed that a specific maneuvering mode (for example, joystick mode, Stay Point, Drift Point, or Fish Point) is often executed after the marine vessel 1 moves to the last stay point and stops in the track point mode or after the marine vessel 1 cruises for a predetermined period of time and stops. Following this, after the marine vessel 1 moves to the last stay point in the track point mode again and stops or the marine vessel 1 cruises for a predetermined period of time and stops again, the BCU 12 displays the Joystick button 23, the Stay Point button 24, the Drift Point button 25, and the Fish Point button 26 at positions easier for the vessel operator to see than the Pattern Steer button 22, the Course Hold button 20, and the Track Point button 21 (FIG. 7C).

In addition, the BCU 12 changes the display position of each of the touch buttons 20 to 26 on the basis of the execution record of each maneuvering mode and/or the place where each maneuvering mode is executed. For example, it is assumed that the marine vessel 1 often executes the Drift Point in order to do fishing in a specific sea region where a tidal stream flows. To cope with this, after the case where the marine vessel 1 has moved to the specific sea region occurs again, the BCU 12 displays the Drift Point button 25 at a position where the vessel operator can easily see it. At this time, it is considered that the possibility of using the available mode while not traveling is higher than the available mode while traveling. Therefore, in addition to the Drift Point button 25, the Joystick button 23, the Stay Point button 24, and the Fish Point button 26 are also displayed at positions easier for the vessel operator to see than the Course Hold button 20, the Track Point button 21, and the Pattern Steer button 22 (FIG. 7D).

According to the present embodiment, the display and non-display of each of the touch buttons 20 to 26 or the display position of each of the touch buttons 20 to 26 is switched in the maneuvering panel 15 on the basis of the configuration of the maneuvering system 11, the maneuvering status of the marine vessel 1, the use purpose of the marine vessel 1, the current position of the marine vessel 1, and/or the execution record of each maneuvering mode. Specifically, the touch button corresponding to the unavailable maneuvering mode is not displayed, or the touch button corresponding to the maneuvering mode considered to be frequently used is displayed at a position where the vessel operator can easily see the touch button. As a result, it is possible to reduce the possibility that the vessel operator erroneously operates the touch button corresponding to the unavailable maneuvering mode or the touch button corresponding to the maneuvering mode considered to be less frequently used. As a result, the usability of each of the touch buttons 20 to 26 can be improved.

In addition, in the present embodiment, display and non-display of each of the touch buttons 20 to 26 displayed on the maneuvering panel 15 are only switched, or the display position is only changed. Therefore, it is not necessary to prepare a plurality of arrangement patterns of physical switches according to the configuration of the maneuvering system 11, the maneuvering status of the marine vessel 1, the use purpose of the marine vessel 1, the current position of the marine vessel 1, and/or the execution record of each maneuvering mode. That is, it is not necessary to prepare an operation panel or the like in which a plurality of physical switches are arranged, which is also advantageous in terms of cost.

In the present embodiment, the Course Hold button 20, the Track Point button 21, the Pattern Steer button 22, the Joystick button 23, the Stay Point button 24, the Drift Point button 25, and the Fish Point button 26 are displayed on the maneuvering panel 15. However, the touch buttons displayed on the maneuvering panel 15 are not limited thereto, and touch buttons corresponding to other maneuvering modes may be displayed.

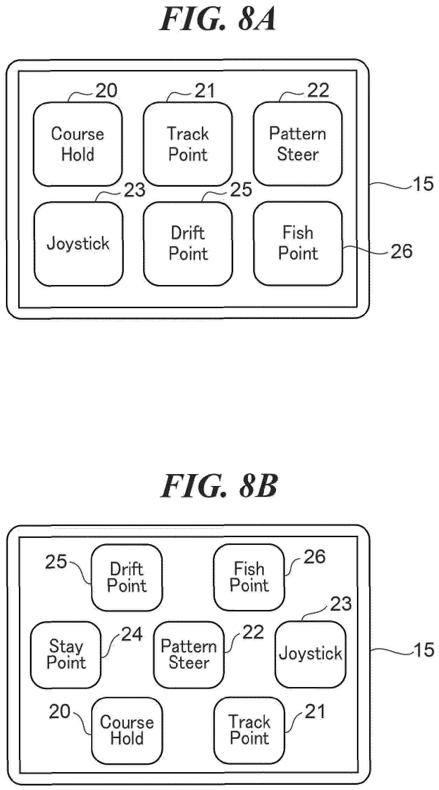

In the present embodiment, display and non-display of each of the touch buttons 20 to 26 are switched. However, in addition to or instead of this, the size of each of the touch buttons 20 to 26 may be changed. For example, in a case where there is only one outboard motor 3 included in the marine vessel 1, the display region of the maneuvering panel 15 has a margin because the Stay Point button 24 is not displayed on the maneuvering panel 15. Therefore, the Course Hold button 20, the Track Point button 21, the Pattern Steer button 22, the Joystick button 23, the Drift Point button 25, and the Fish Point button 26 may be displayed in an enlarged manner by taking advantage of the margin (FIG. 8A). As a result, it is possible to improve the visibility and operability of the touch buttons 20 to 23, 25, and 26 by the vessel operator.

Further, in the present embodiment, the display positions of the touch buttons 20 to 26 are changed by switching the display positions of the touch buttons 20 to 26 as illustrated in FIGS. 6A to 6D and FIGS. 7A to 7D. However, the display position of each of the touch buttons 20 to 26 may be changed by moving each of the touch buttons 20 to 26 to a position where each of the touch buttons 20 to 26 has not been displayed. For example, in a case where the vessel operator replies that the marine vessel 1 is mainly to be used in-shore by the input to the MFD 8, the Joystick button 23, the Stay Point button 24, the Drift Point button 25, and the Fish Point button 26 may be moved to positions where the touch buttons are not displayed (from the respective positions shown in FIG. 6B) to generate a margin in the upper portion of the display region of the maneuvering panel 15. At this time, even in the available mode while traveling, the Pattern Steer button 22 for displaying the pattern maneuvering mode which is assumed to be used in-shore may be displayed above the Course Hold button 20 and the Track Point button 21 (FIG. 8B).

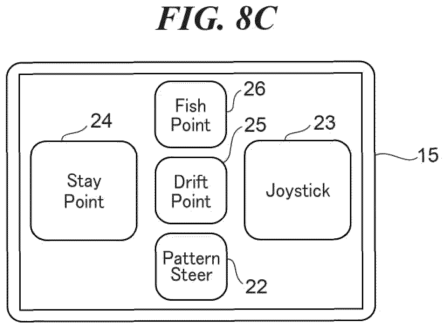

Further, the size of each of the touch buttons 20 to 26 may be changed as well as each of the touch buttons 20 to 26 may be moved to a position where each of the touch buttons 20 to 26 is not displayed. For example, in a case where the vessel operator replies that the marine vessel 1 is mainly to be used in-shore by the input to the MFD 8, it is considered that the Course Hold button 20 and the Track Point button 21 are not used, and the Stay Point button 24 and the Joystick button 23 become to be used more frequently. Therefore, in this case, the Course Hold button 20 and/or the Track Point button 21 may not be displayed, and furthermore, the Pattern Steer button 22, the Drift Point button 25, and the Fish Point button 26 may be moved to positions where the respective touch buttons are not displayed (from the respective positions shown in FIG. 6B) to have a margin for a display region on the maneuvering panel 15. Further, the Stay Point button 24 and the Joystick button 23, which are considered to be frequently used, may be enlarged and displayed by taking advantage of the margin of the display region (FIG. 8C). As a result, the visibility and operability of the Stay Point button 24 and the Joystick button 23 can be improved. Note that switching between display and non-display of each of the touch buttons 20 to 26 and changing the display position of each of the touch buttons 20 to 26 are not limited to the cases illustrated in FIGS. 5A to 8C.

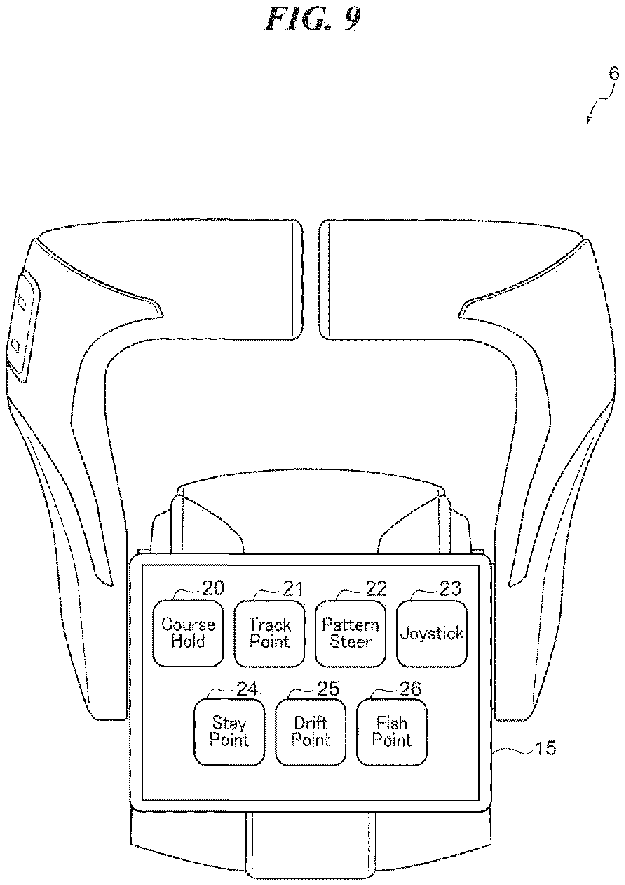

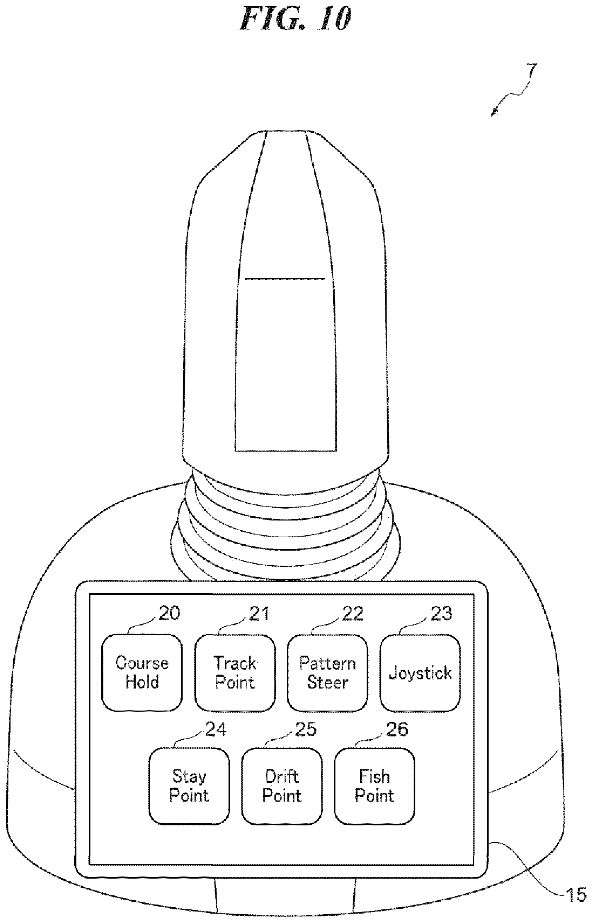

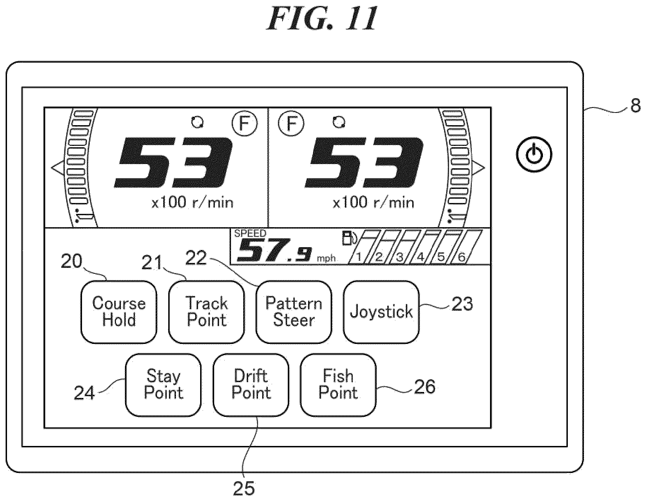

Further, in the present embodiment, the maneuvering panel 15 is disposed in the steering mechanism 5. However, as illustrated in FIG. 9, the maneuvering panel 15 may be disposed in the remote controller 6 (operation means). Alternatively, as illustrated in FIG. 10, the maneuvering panel 15 may be disposed on the joystick 7 (operation means). Alternatively, as illustrated in FIG. 11, a partial region of the touch panel of the MFD 8 may function as a maneuvering panel, and the Course Hold button 20, the Track Point button 21, the Pattern Steer button 22, the Joystick button 23, the Stay Point button 24, the Drift Point button 25, and the Fish Point button 26 may be displayed in the area. In this case, the maneuvering system 11 may not include the maneuvering panel 15.

Note that, also in the case of adopting the configurations illustrated in FIGS. 9 to 11, the display and non-display of each of the touch buttons 20 to 26 or the display position of each of the touch buttons 20 to 26 is switched on the basis of the configuration of the maneuvering system 11, the maneuvering status of the marine vessel 1, the use purpose of the marine vessel 1, the current position of the marine vessel 1, and/or the execution record of each maneuvering mode.

Next, a second embodiment will be described. Since the second embodiment is different from the first embodiment only in the form of the maneuvering panel, the overlapping configuration and operation will not be described. Hereinafter, configurations and effects different from those of the first embodiment will be described.

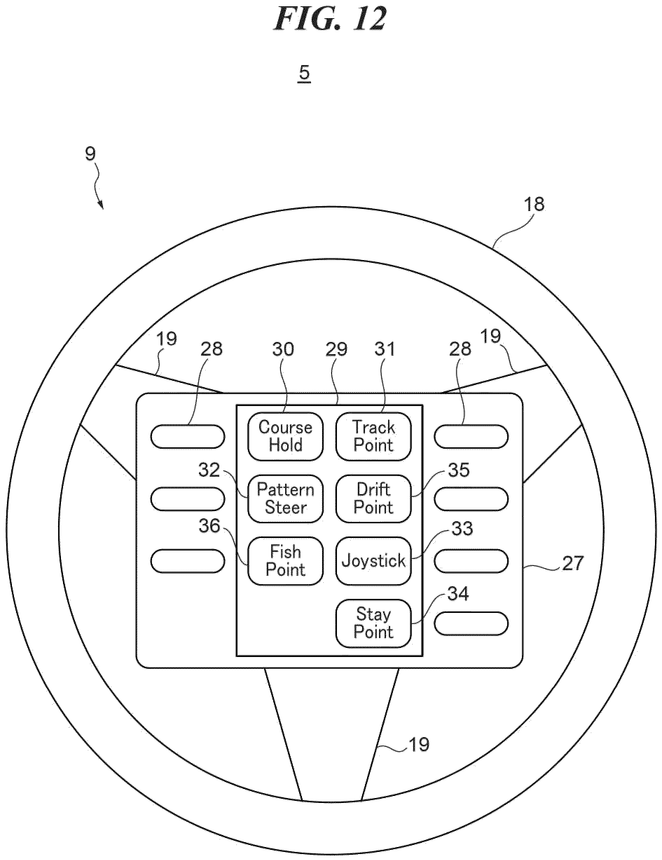

FIG. 12 is a diagram for explaining the configuration of the steering mechanism 5 in the present embodiment, and FIG. 12 illustrates the steering mechanism 5 as viewed from the vessel operator side. Note that the vertical direction and the horizontal direction in FIG. 12 coincide with the up-down direction and the left-right direction of the marine vessel 1.

In FIG. 12, the steering mechanism 5 includes a maneuvering panel 27 instead of the maneuvering panel 15. Similarly to the maneuvering panel 15, the maneuvering panel 27 is attached to the column portion so that the maneuvering panel 27 does not rotate even when the steering wheel 9 rotates about the steering shaft.

The maneuvering panel 27 is a horizontally long rectangular panel, and includes a plurality of push buttons 28 arranged side by side in the vertical direction in a left side portion and a right side portion in the maneuvering panel 27. Each push button 28 is a physical switch for the vessel operator to perform an input operation by pushing down with a finger. In addition, the maneuvering panel 27 has a display 29 (display device) at the center thereof. The display 29 is, for example, an LCD display, and displays a plurality of function display icons 30 to 36 (maneuvering function display unit) so as to be adjacent to and correspond to the respective push buttons 28.

The function display icons 30 to 36 include a character string indicating a maneuvering mode executed when each adjacent push button 28 is pressed down. For example, a Course Hold icon 30 corresponds to the course maintenance mode, and when the push button 28 adjacent to the Course Hold icon 30 is pressed down, an instruction to execute the course maintenance mode is transmitted from the maneuvering panel 27 to the BCU 12. A Track Point icon 31 corresponds to a track point mode, and when the push button 28 adjacent to the Track Point icon 31 is pressed down, an instruction to execute the track point mode is transmitted from the maneuvering panel 27 to the BCU 12. A Pattern Steer icon 32 corresponds to a pattern maneuvering mode, and when the push button 28 adjacent to the Pattern Steer icon 32 is pressed down, an instruction to execute the pattern maneuvering mode is transmitted from the maneuvering panel 27 to the BCU 12.

In addition, a Joystick icon 33 corresponds to the joystick mode, and when the push button 28 adjacent to the Joystick icon 33 is pressed down, an instruction to execute the joystick mode is transmitted from the maneuvering panel 27 to the BCU 12. A Stay Point icon 34 corresponds to the stay point, and when the push button 28 adjacent to the Stay Point icon 34 is pressed down, an instruction to execute the stay point is transmitted from the maneuvering panel 27 to the BCU 12. A Drift Point icon 35 corresponds to the drift point, and when the push button 28 adjacent to the Drift Point icon 35 is pressed down, an instruction to execute the drift point is transmitted from the maneuvering panel 27 to the BCU 12. A Fish Point icon 36 corresponds to the fish point, and when the push button 28 adjacent to the Fish Point icon 36 is pressed down, an instruction to execute the Fish Point is transmitted from the maneuvering panel 27 to the BCU 12.

The display position of the function display icons 30 to 36 on the display 29 can be changed. As the display positions of the function display icons 30 to 36 are changed, the correspondence between the push button 28 and the maneuvering mode to be executed is also changed. For example, the Fish Point icon 36 may move from next to the push button 28 at the lowermost on the left side to next to the push button 28 at the uppermost on the right side. In this case, before the movement of the Fish Point icon 36, the fish point is executed when the push button 28 at the lowermost on the left side is pressed down, but after the movement of the Fish Point icon 36, the fish point is not executed even when the push button 28 at the lowermost on the left side is pressed down. Instead, after the movement of the Fish Point icon 36, when the push button 28 at the lowermost on the left side is pushed down, the maneuvering mode indicated by the function display icon adjacent to the pushed push button 28 at the lowermost on the left side at that time is executed. After the movement of the Fish Point icon 36, the push button 28 at the uppermost on the right side is pressed down to execute the fish point.

In the present embodiment, the Course Hold icon 30, the Track Point icon 31, and the Pattern Steer icon 32 are function display icons (first maneuvering function display unit) indicating the available mode while traveling. The Joystick icon 33, the Stay Point icon 34, the Drift Point icon 35, and the Fish Point icon 36 are function display icons (second maneuvering function display unit) indicating the available mode while not traveling.

In addition, in the present embodiment, the BCU 12 controls the display 29 of the maneuvering panel 27 on the basis of the configuration of the maneuvering system 11, the maneuvering status of the marine vessel 1, the use purpose of the marine vessel 1, the current position of the marine vessel 1, and/or the execution record of each maneuvering mode, and switches the display and non-display of each of the function display icons 30 to 36 or changes the display position of each of the function display icons 30 to 36.

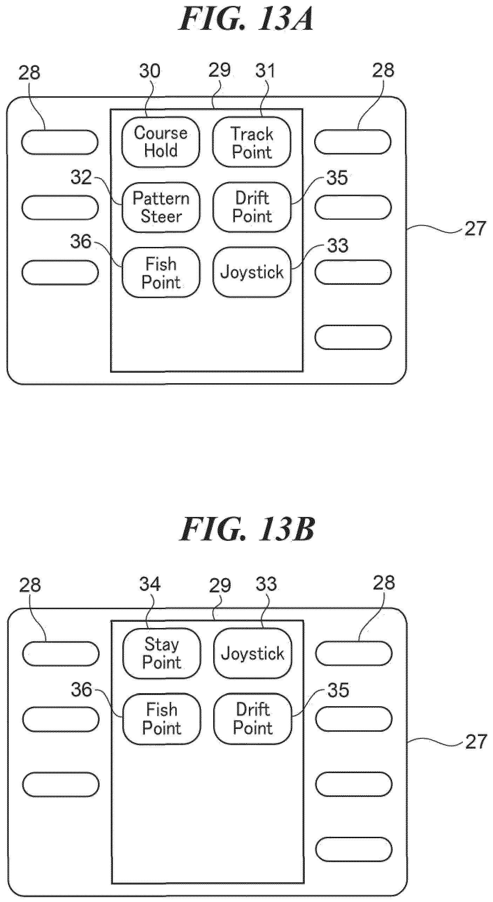

FIGS. 13A to 13D are diagrams for explaining a case of switching between display and non-display of each of the function display icons 30 to 36 of the maneuvering panel 27 and changing the display position of each of the function display icons 30 to 36. Note that switching between display and non-display of each of the function display icons 30 to 36 and changing the display position of each of the function display icons 30 to 36 are not limited to the cases illustrated in FIGS. 13A to 13D.

For example, in a case where the marine vessel 1 includes only one outboard motor 3, the BCU 12 does not display the Stay Point icon 34 on the display 29 (FIG. 13A). Further, in a case where the lever 10 of the remote controller 6 is located at the "N" position, the BCU 12 does not display any of the Course Hold icon 30, the Track Point icon 31, and the Pattern Steer icon 32, which are function display icons for displaying available modes while traveling, on the display 29. In this case, the Joystick icon 33, the Stay Point icon 34, and/or the Fish Point icon 36 may be moved upward in consideration of the visibility of the vessel operator (FIG. 13B).

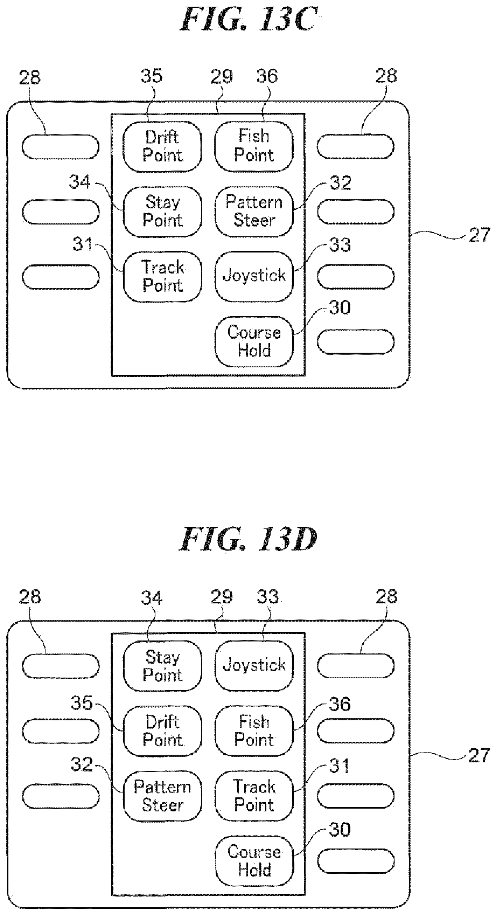

Further, in a case where the vessel operator replies that the marine vessel 1 is to be used for fishing by the input to the MFD 8, the Stay Point icon 34, the Drift Point icon 35, and the Fish Point icon 36, which are function display icons for displaying the available mode while not traveling, and the Pattern Steer icon 32 for displaying the pattern maneuvering mode that may be used for fishing even in the available mode while traveling, are displayed above the Course Hold icon 30 and the Track Point icon 31 (FIG. 13C). Note that, in the maneuvering panel 27 illustrated in FIG. 13C, due to the size of the display region of the display 29, among the function display icons in the available mode while not traveling, the Joystick icon 33, which is considered to be less frequently used in fishing, is displayed below the display of the display 29 for the sake of convenience.

In addition, in a case where the vessel operator moves the lever 10 of the remote controller 6 to the "N" position after the marine vessel 1 has moved to the vicinity of the pier, for example, the center of gravity of the marine vessel 1 has become within 100 m from the pier, the BCU 12 displays the Joystick icon 33 at the uppermost position, which is an easily viewable position for the vessel operator. In addition, at this time, it is considered that there is a higher possibility of using the available mode while not traveling than the available mode while traveling. Therefore, in addition to the Joystick icon 33, the BCU 12 displays the Stay Point icon 34, the Drift Point icon 35, and the Fish Point icon 36 above the Course Hold icon 30, the Track Point icon 31, and the Pattern Steer icon 32 (FIG. 13D).

According to the present embodiment, the display and non-display of each of the function display icons 30 to 36 or the display position of each of the function display icons 30 to 36 is switched in the maneuvering panel 27 on the basis of the configuration of the maneuvering system 11, the maneuvering status of the marine vessel 1, the use purpose of the marine vessel 1, the current position of the marine vessel 1, and/or the execution record of each maneuvering mode. Specifically, the function display icon corresponding to the unavailable maneuvering mode is not displayed, or the function display icon corresponding to the maneuvering mode considered to be frequently used is displayed at a position where the vessel operator can easily see the function display icon. Accordingly, it is possible to reduce the possibility that the vessel operator erroneously operates the push button 28 adjacent to the function display icon corresponding to the unavailable maneuvering mode or the push button 28 adjacent to the function display icon corresponding to the maneuvering mode considered to be less frequently used. As a result, usability of the maneuvering panel 27 can be improved.

In the present embodiment, each of the function display icons 30 to 36 includes a character string indicating the corresponding maneuvering mode. However, each of the function display icons 30 to 36 may not include a character string, and may be configured by an illustration indicating a corresponding maneuvering mode. In the present embodiment, the maneuvering panel 27 is disposed in the steering mechanism 5. However, the maneuvering panel 27 may be disposed on the remote controller 6 or may be disposed on the joystick 7.

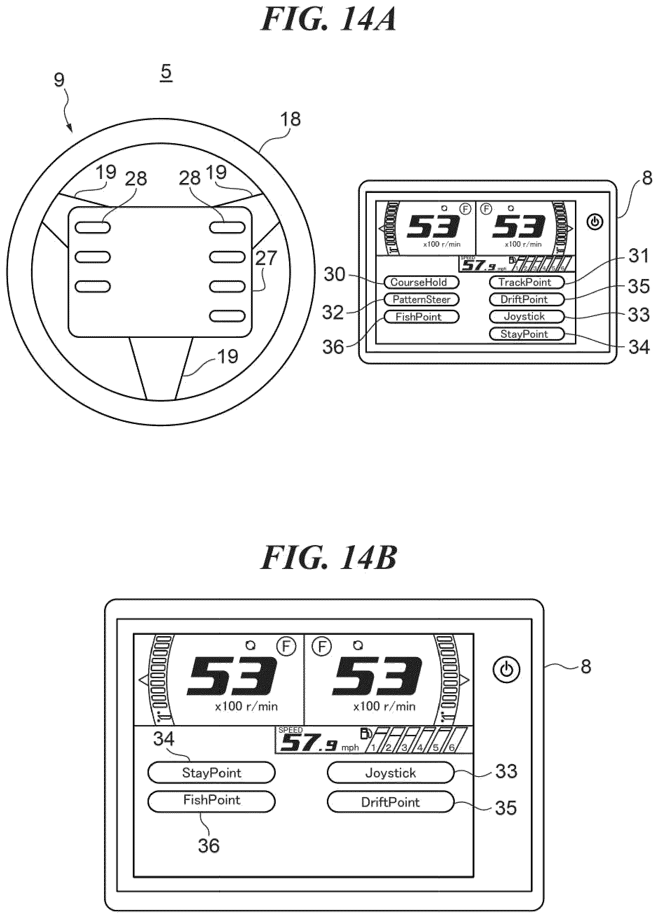

Further, the push buttons 28 and the function display icons 30 to 36 may be arranged separately. FIGS. 14A and 14B are diagrams for explaining a case where the push buttons 28 and the function display icons 30 to 36 are separately arranged. For example, as illustrated in FIG. 14A, the maneuvering panel 27 disposed in the steering mechanism 5 does not include the display 29, and each of the function display icons 30 to 36 is displayed on the touch panel of the MFD 8. In the region where the function display icons 30 to 36 are displayed, the arrangement of the function display icons 30 to 36 corresponds to that of the push buttons 28 on the maneuvering panel 27. When a certain push button 28 of the maneuvering panel 27 is pushed down, a maneuvering mode indicated by a function display icon displayed on the touch panel of the MFD 8 and having a position corresponding to the pushed push button 28 is executed.

The display positions of the function display icons 30 to 36 on the touch panel of the MFD 8 can be changed. When the display positions of the function display icons 30 to 36 are changed, the maneuvering mode executed when a certain push button 28 is pushed down is also changed. Specifically, the maneuvering mode executed by pressing a certain push button 28 is changed from the maneuvering mode indicated by the function display icon whose position corresponds to the position of the push button 28 before the display position is changed to the maneuvering mode indicated by the function display icon whose position corresponds to the position of the push button 28 after the change.

In this manner, even in a case where the push buttons 28 and the function display icons 30 to 36 are separately arranged, the BCU 12 controls the touch panel of the MFD 8 to switch between display and non-display of the function display icons 30 to 36 or change the display positions of the function display icons 30 to 36 on the basis of the configuration of the maneuvering system 11, the maneuvering status of the marine vessel 1, the use purpose of the marine vessel 1, the current position of the marine vessel 1, and/or the execution record of each maneuvering mode.

For example, in a case where the lever 10 of the remote controller 6 is located at the "N" position, the BCU 12 displays none of the Pattern Steer icon 32, the Course Hold icon 30, and the Track Point icon 31 on the touch panel of the MFD 8. In this case, the Joystick icon 33, the Stay Point icon 34, and/or the Fish Point icon 36 may be moved upward in consideration of the visibility of the vessel operator (FIG. 14B).

Hitherto, the description has been given about the preferred embodiments.

Alternatively, the execution record of each maneuvering mode may be shared by a plurality of marine vessels 1. Specifically, the BCU 12 of a certain marine vessel 1 stores an execution record of each maneuvering mode in a server via a network. Then, when the other marine vessels 1 start traveling, the BCU 12 of the other marine vessels 1 may refer to the execution record of each maneuvering mode stored in the server, and switch between display and non-display of each of the touch buttons 20 to 26 or change the display position of each of the touch buttons 20 to 26 on the basis of the reference result.

Further, the present teaching may be implemented by the BCU 12 executing a program by reading the program for implementing the functions of the above-described embodiments from a memory or the like included in the BCU 12. Alternatively, the present teaching may be realized by supplying a program for realizing the functions of the above-described embodiments to the maneuvering system 11 via a network or a storage medium and executing the supplied program by the BCU 12. Furthermore, the present teaching may also be realized by a circuit (for example, ASIC) that realizes one or more functions of the BCU 12.

## Claims

1. A display control method of a plurality of maneuvering function display units (20 to 26; 30 to 36) that display maneuvering functions of a marine vessel (1), wherein the plurality of maneuvering function display units (20 to 26; 30 to 36) include: a first maneuvering function display unit (20, 21, 22; 30, 31, 32) that displays the maneuvering function that can start to be used while the marine vessel (1) is traveling; and a second maneuvering function display unit (23, 24, 25, 26; 33, 34, 35, 36) that displays the maneuvering function that can start to be used while the marine vessel (1) is not traveling,
the display control method comprising:
changing a display form of each of the maneuvering function display units (20 to 26; 30 to 36) on a basis of at least one of a configuration of a maneuvering system of the marine vessel (1), a maneuvering status of the marine vessel (1), a use purpose of the marine vessel (1), a current position of the marine vessel (1), and an execution record of the maneuvering function.

2. The display control method according to claim 1, wherein the display control method comprising:
changing the display form of each of the maneuvering function display units (20 to 26; 30 to 36) by switching between display and non-display of each of the maneuvering function display units (20 to 26; 30 to 36) or changing a display position of each of the maneuvering function display units (20 to 26; 30 to 36) on a basis of at least one of a configuration of a maneuvering system of the marine vessel (1), a maneuvering status of the marine vessel (1), a use purpose of the marine vessel (1), a current position of the marine vessel (1), and an execution record of the maneuvering function.

3. The display control method according to claim 1 or 2, wherein the maneuvering function display unit is a touch button (20 to 26) as a software key displayed on a touch panel (15), or
further comprising:
preparing a physical switch (28) corresponding to each of the maneuvering functions and a display device (29) provided separately from the physical switch (28); and
displaying the maneuvering function display unit (30 to 36) on the display device (29) such that the maneuvering function display unit (30 to 36) indicates each of the maneuvering functions corresponding to the physical switch (28).

4. The display control method according to at least one of the claims 1 to 3, further comprising:
in a case where the marine vessel (1) includes only one marine propulsion device (3), not displaying the second maneuvering function display unit (24; 34) related to a maneuvering function involving lateral movement of the marine vessel (1).

5. The display control method according to at least one of the claims 1 to 4,
further comprising:
not displaying the second maneuvering function display unit (23, 24, 25, 26; 30, 31, 32) in a case where the marine vessel (1) is traveling, and/or
further comprising:
not displaying the first maneuvering function display unit (20, 21, 22; 30, 31, 32) in a case where the marine vessel (1) is not traveling.

6. The display control method according to at least one of the claims 1 to 5, further comprising:
displaying the maneuvering function display unit corresponding to a maneuvering function considered to be frequently used at a position closer to a vessel operator than other maneuvering function display units, on a basis of at least one of a configuration of a maneuvering system of the marine vessel (1), a maneuvering status of the marine vessel (1), a use purpose of the marine vessel (1), a current position of the marine vessel (1), and an execution record of the maneuvering function.

7. The display control method according to claim 6,
further comprising:
displaying the second maneuvering function display unit (23, 24, 25, 26) at a position closer to a vessel operator than the first maneuvering function display unit (20, 21, 22) in a case where the marine vessel (1) is used in-shore, and/or
further comprising:
displaying the first maneuvering function display unit (20, 21, 22) at a position closer to a vessel operator than the second maneuvering function display unit (23, 24, 25, 26) in a case where the marine vessel (1) is used off-shore, and/or
further comprising:
displaying the second maneuvering function display unit (23, 24, 25, 26) at a position closer to a vessel operator than the first maneuvering function display unit (20, 21, 22) in a case where the marine vessel (1) is used for fishing, and/or
further comprising:
displaying the second maneuvering function display unit (23, 24, 25, 26) at a position closer to a vessel operator than the first maneuvering function display unit (20, 21, 22) in a case where the marine vessel (1) is stopped after traveling, and/or
further comprising:
displaying the second maneuvering function display unit (23, 24, 25, 26) at a position closer to a vessel operator than the first maneuvering function display unit (20, 21, 22) in a case where the marine vessel (1) moves to a vicinity of a pier.

8. The display control method according to claim 6 or 7, wherein the marine vessel (1) includes a marine propulsion device (3), and
the display control method comprises:
displaying the second maneuvering function display unit (23, 24, 25, 26) at a position closer to a vessel operator than the first maneuvering function display unit (20, 21, 22) until a predetermined period of time elapses after start of the marine propulsion device (3).

9. The display control method according to at least one of the claims 1 to 8, further comprising:
displaying the maneuvering function display unit corresponding to a maneuvering function considered to be frequently used in an enlarged manner as compared with other maneuvering function display units on a basis of at least one of a configuration of a maneuvering system of the marine vessel (1), a maneuvering status of the marine vessel (1), a use purpose of the marine vessel (1), a current position of the marine vessel (1), and an execution record of the maneuvering function.

10. The display control method according to at least one of the claims 1 to 9, wherein the marine vessel (1) includes an operation means (5, 6, 7; 18) to be operated by a vessel operator maneuvering the marine vessel (1),
the plurality of maneuvering function display units are arranged in the operation means (5, 6, 7; 18), and
the display control method comprises:
displaying the maneuvering function display unit corresponding to a maneuvering function considered to be frequently used at a position closer to a hand of the vessel operator who operates the operation means than other maneuvering function display units, on a basis of at least one of a configuration of a maneuvering system of the marine vessel (1), a maneuvering status of the marine vessel (1), a use purpose of the marine vessel (1), a current position of the marine vessel (1), and an execution record of the maneuvering function.

11. The display control method according to claim 10, wherein the operation means is any one of a steering mechanism (5), a remote controller (6), and a joystick (7).

12. A maneuvering system of a marine vessel (1), the system comprising:
a plurality of maneuvering function display units (20 to 26; 30 to 36) configured to display maneuvering functions of the marine vessel (1); and
a controller,
wherein the plurality of maneuvering function display units (20 to 26; 30 to 36) include a first maneuvering function display unit (20, 21, 22; 30, 31, 32) configured to display the maneuvering function that can start to be used while the marine vessel (1) is traveling and a second maneuvering function display unit (23, 24, 25, 26; 33, 34, 35, 36) configured to display the maneuvering function that can start to be used while the marine vessel (1) is not traveling, and
the controller is configured to switch between display and non-display of each of the maneuvering function display units (20 to 26; 30 to 36) or changes a display position of each of the maneuvering function display units (20 to 26; 30 to 36) on a basis of at least one of a configuration of a maneuvering system of the marine vessel (1), a maneuvering status of the marine vessel (1), a use purpose of the marine vessel (1), a current position of the marine vessel (1), and an execution record of the maneuvering function.

13. The maneuvering system according to claim 12, wherein the maneuvering function display unit is a touch button (20 to 26) as a software key displayed on a touch panel (15).

14. The maneuvering system according to claim 12, further comprising:
physical switches (28) corresponding respectively to the maneuvering functions; and
a display device (29) provided separately from the physical switches (28),
wherein the maneuvering function display unit (30 to 36) indicates the maneuvering functions corresponding respectively to the physical switches (28) in the display device (29).
